# EUROPÄISCHE PATENTSCHRIFT

(11) **EP 2 743 478 B1**
(45) Veröffentlichungstag und Bekanntmachung des Hinweises auf die Patenterteilung: **26.09.2018**
(21) Anmeldenummer: 13005635.1
(22) Anmeldetag: 04.12.2013
(51) Int. Cl.: F02D 11/02, F02B 63/02, G05G 5/04

(54) **Arbeitsgerät**
Work device
Appareil de travail

(30) Priorität: 14.12.2012 DE 102012024481
(43) Veröffentlichungstag der Anmeldung: 18.06.2014
(73) Patentinhaber: Andreas Stihl AG & Co. KG, 71336 Waiblingen (DE)
(72) Erfinder: Götzel, Arne, D-08248 Klingenthal (DE); Häberlein, Jürgen, 71364 Winnenden (DE)
(74) Vertreter: Reinhardt, Annette

(56) Entgegenhaltungen:
- EP-B1- 1 223 318
- DE-A1-102006 050 430
- DE-A1-102010 023 079
- US-A- 5 829 312

## Beschreibung

Die Erfindung betrifft ein Arbeitsgerät mit einem Antriebsmotor und einer Bedienvorrichtung der im Oberbegriff des Anspruchs 1 angegebenen Gattung.

Bei Arbeitsgeräten wie beispielsweise Freischneidern oder dgl. ist es für manche Anwendungsfälle wünschenswert, das Arbeitsgerät bei einer konstanten, gegenüber der Maximaldrehzahl verminderten Drehzahl zu betreiben, um das gewünschte Schnittergebnis zu erzielen. Aus der EP 1 223 318 B1 und der US 5,765,445 A ist ein einstellbarer Zwischenanschlag für den Gashebel bekannt, mit dem der Bediener den Gashebel einfach in einer teilweise betätigten Stellung halten kann. Der Zwischenanschlag umfasst eine Feder. Nach Erreichen des Zwischenanschlags kann der Gashebel entgegen der Federkraft weiter betätigt werden. Hierzu müssen hohe Bedienkräfte aufgebracht werden. Auch zum Halten des Gashebels beispielsweise in Vollgasstellung muss der Bediener den Gashebel entgegen der Kraft der Feder des Zwischenanschlags halten. Dadurch ist das Arbeiten oberhalb der durch den Zwischenanschlag festgelegten Drehzahl für den Bediener ermüdend.

Aus der DE 10 2010 023 079 A1 ist ein elektronisches Fahrpedalsystem für ein Kraftfahrzeug bekannt, bei dem die Betätigungskraft für das Fahrpedal an einer vorgegebenen Stelle im Betätigungsweg erhöht ist. Hierzu ist ein Widerstandselement vorgesehen, das in eine Führungsbahn hineinragt und das vorgespannt ist. In der Führungsbahn bewegt sich ein mit dem Fahrpedal verbundener Führungsstift.

Der Erfindung liegt die Aufgabe zugrunde, ein Arbeitsgerät der gattungsgemäßen Art zu schaffen, mit dem ein ermüdungsfreies Arbeiten auch bei hohen Drehzahlen möglich ist und das ein einfaches Arbeiten bei unterschiedlichen verminderten Drehzahlen ermöglicht.

Diese Aufgabe wird durch ein Arbeitsgerät mit den Merkmalen des Anspruchs 1 gelöst.

Es ist vorgesehen, dass die Bedienkraft nach Überwinden des Zwischenanschlags bei weiterer Betätigung des Bedienelements wieder abfällt. Zum Arbeiten bei einer Drehzahl oberhalb der Drehzahl, die durch den Zwischenanschlag definiert ist, muss der Bediener dadurch nicht dauerhaft die zum Überwinden des Anschlags notwendige Kraft aufbringen, sondern nur eine deutlich verringerte Bedienkraft. Diese Bedienkraft entspricht vorteilhaft der üblichen Betätigungskraft eines Bedienelements, beispielsweise eines Gashebels, ohne entsprechenden Zwischenanschlag. Die Kraft zum Betätigen des Bedienelements steigt üblicherweise linear über dem Bedienweg an. Vorteilhaft steigt die Kraft bei Erreichen des Zwischenanschlags gegenüber dieser linearen Kennlinie stark an und fällt nach Überwinden des Zwischenanschlags wieder auf eine lineare Kennlinie zurück. Dadurch kann eine starke Kraftüberhöhung für die Überwindung des Zwischenanschlags erreicht werden.

Aufgrund des Zwischenanschlags ist ein gewünschter Arbeitspunkt für das Arbeitsgerät einstellbar. Der Zwischenanschlag ist dabei vorteilhaft auch während des Betriebs einstellbar. Insbesondere ist es möglich, den Gashebel durch Verstellen des Zwischenanschlags in Richtung auf geringere Drehzahlen zurückzustellen. Dadurch kann ein gewünschter Arbeitspunkt im Betrieb feinfühlig eingestellt werden. Die Verstellung des Gashebels über das Einstellelement des Zwischenanschlags ist möglich, wenn die zum Überwinden des Zwischenanschlags benötigte Kraft deutlich über der vor und nach Erreichen des Zwischenanschlags benötigten Betätigungskraft liegt. Da die Bedienkraft nach Überwinden des Zwischenanschlags wieder abfällt und nicht dauerhaft vom Bediener aufgebracht werden muss, kann diese Kraft entsprechend hoch ausgelegt werden.

Dadurch, dass die Position des Zwischenanschlags einstellbar ist, ist auf einfache Weise ein Arbeiten bei unterschiedlichen verminderten Drehzahlen möglich. Die Position des Einstellelements ist vorteilhaft unabhängig von der Position des Bedienelements einstellbar. Das Einstellelement kann dabei am Bedienelement angeordnet und gegenüber dem Bedienelement einstellbar sein. Die vom Einstellelement vorgegebene Position für den Zwischenanschlag ist jedoch unabhängig von der Position des Bedienelements. Vorteilhaft sind das Einstellelement und das Bedienelement räumlich getrennt voneinander angeordnet.

Die Bedienkraft nach Überwinden des Zwischenanschlags ist vorteilhaft kleiner als die Hälfte, insbesondere kleiner als ein Viertel der maximalen Bedienkraft beim Überwinden des Zwischenanschlags. Der Zwischenanschlag wird durch ein erstes, mit dem Bedienelement verbundenes Anschlagelement und ein zweites, mit dem Gehäuse verbundenes Anschlagelement gebildet. Dabei kann zur Einstellung des Zwischenanschlags die Position des ersten Anschlagelements relativ zu dem Bedienelement oder die Position des zweiten Anschlagelements relativ zu dem Gehäuse verstellbar sein. Die Anschlagelemente bewegen sich vorteilhaft über dem gesamten Bedienweg des Bedienelements von der Nullstellung bis zu der Maximalstellung relativ zueinander. Die Nullstellung des Bedienelements ist dabei die unbetätigte Stellung des Bedienelements und die Maximalstellung die maximal betätigte Stellung. Die Maximalstellung kann beispielsweise durch einen Anschlag konstruktiv vorgegeben sein. Der Zwischenanschlag wird demnach nicht vom Bedienelement verschoben, sondern das Bedienelement überwindet den Zwischenanschlag, wodurch die Betätigungskraft nach Überwinden des Zwischenanschlags wieder absinken kann.

Eines der Anschlagelemente ist ein gefedertes Element, und das andere Anschlagelement ist eine Anschlagfläche. Beim Überwinden des Zwischenanschlags wird das gefederte Element vorteilhaft elastisch verformt und über den mechanischen Zwischenanschlag bewegt. Nachdem das gefederte Element über den mechanischen Anschlag bewegt wurde, sinkt die Bedienkraft wieder ab. Das gefederte Element ist dabei vorteilhaft sehr steif ausgelegt, besitzt also eine große Federkonstante. Dadurch kann auf einfache Weise eine sehr deutliche Überhöhung der benötigten Bedienkraft am Zwischenanschlag erreicht werden. Vorteilhaft ist die Position des gefederten Elements einstellbar. Es kann jedoch auch vorgesehen sein, dass die Position der Anschlagfläche zur Einstellung des Zwischenanschlags einstellbar ist.

Die Anschlagfläche ist zur Bewegungsrichtung des gefederten Elements bei Erreichen der Anschlagfläche, also zu der Richtung, in der sich das gefederte Element beim Erreichen der Anschlagfläche bewegt, vorteilhaft um einen Winkel von mehr als 45° geneigt. Der Neigungswinkel beträgt vorteilhaft mehr als etwa 70°, insbesondere zwischen etwa 75° und etwa 85°. Dadurch wird erreicht, dass der Zwischenanschlag vom Bediener auch im Betrieb, in dem erhebliche Vibrationen entstehen können, deutlich spürbar ist. Dadurch, dass die Betätigungskraft zum Überwinden des Zwischenanschlags nur sehr kurzzeitig aufgewendet werden muss und die Bedienkraft anschließend wieder abfällt, ist eine vergleichsweise hohe Bedienkraft zum Überwinden des Zwischenanschlags akzeptabel.

Eine einfache Gestaltung ergibt sich, wenn das gefederte Element beim Betätigen des Bedienelements an einer Gleitfläche abgleitet. Die Gleitfläche besitzt einen ersten, in Betätigungsrichtung vor der Anschlagfläche liegenden Abschnitt und einen zweiten, in Betätigungsrichtung hinter der Anschlagfläche liegenden Abschnitt. Der in Betätigungsrichtung vor der Anschlagfläche liegende Abschnitt ist dabei der Abschnitt, an dem das gefederte Element anliegt, wenn das Bedienelement sich vor dem Zwischenanschlag befindet, und der zweite Abschnitt der Gleitfläche ist der Abschnitt, an dem das gefederte Element anliegt, wenn der Zwischenanschlag überwunden wurde. Vorteilhaft bildet die Anschlagfläche eine Rampe zwischen den beiden Abschnitten der Gleitfläche. Beim Loslassen des Bedienelements ist der Zwischenanschlag dadurch nicht oder nur wenig spürbar und das Bedienelement wird, wenn es losgelassen wird in seine Nullstellung zurückgestellt, vorteilhaft aufgrund der Kraft einer Rückstellfeder. Die Gleitflächen im ersten und im zweiten Abschnitt verlaufen dabei vorteilhaft etwa parallel zur Bewegungsrichtung des gefederten Elements. Führt das gefederte Element eine lineare Bewegung aus, so verlaufen vorteilhaft auch die beiden Abschnitte der Gleitfläche eben. Bewegt sich das gefederte Element auf einer bogenförmigen Bahn, so verläuft die Gleitfläche vorteilhaft mit jeweils entsprechendem Radius bogenförmig. Die Bewegungsrichtung verläuft dabei tangential zur Gleitfläche. Um im zweiten Abschnitt eine vergrößerte Bedienkraft und Rückstellkraft zu erreichen, ist vorteilhaft vorgesehen, dass die Gleitfläche im zweiten Abschnitt gegenüber der Bewegungsrichtung der Gleitfläche geneigt verläuft. Ein einfacher Aufbau ergibt sich, wenn die Gleitfläche um eine Drehachse schwenkbar gelagert ist. Der Abstand der Anlagefläche des gefederten Elements an der Gleitfläche zur Drehachse vergrößert sich dabei vorteilhaft kontinuierlich bei einer Bewegung des Bedienelements in der Betätigungsrichtung.

Eine feinfühlige Einstellung der Position des Zwischenanschlags wird ermöglicht, wenn das Einstellelement über ein Stellgetriebe auf mindestens eines der beiden Anschlagelemente wirkt. Das Stellgetriebe ist dabei ein Getriebe, das den Stellweg des Einstellelements in einen anderen, insbesondere deutlich kleineren Stellweg eines der Anschlagelemente übersetzt. Eine einfache Gestaltung ergibt sich, wenn das Stellgetriebe einen Positionierzapfen umfasst, der in einer Positioniernut geführt ist. Die Positioniernut verläuft dabei vorteilhaft spiralförmig. Vorteilhaft wird mehr als eine Umdrehung des Einstellelements benötigt, um den Zwischenanschlag von einer Position benachbart zur Nullstellung des Bedienelements zu einer Position benachbart zur Maximalstellung des Bedienelements zu verstellen. Vorteilhaft ist eine Verstellung des Zwischenanschlags im gesamten Bereich zwischen Nullstellung und Maximalstellung möglich. Die Position des Zwischenanschlags ist insbesondere stufenlos verstellbar, so dass der Zwischenanschlag in jede Position zwischen Nullstellung und Maximalstellung gestellt werden kann.

Vorteilhaft ist die Positioniernut am Einstellelement ausgebildet, und der Positionierzapfen ist fest mit einem der Anschlagelemente verbunden. Das Einstellelement wirkt insbesondere auf das zweite Anschlagelement, das zur Verstellung des Zwischenanschlags in Betätigungsrichtung des Bedienelements beweglich ist. Eine einfache, kompakte Anordnung wird erreicht, wenn das Bedienelement um eine Schwenkachse schwenkbar gelagert und das zweite Anschlagelement zur Verstellung des Zwischenanschlags um die Schwenkachse des Bedienelements verschwenkbar ist.

Eine einfache Montage des einstellbaren Zwischenanschlags wird ermöglicht, wenn das Gehäuse ein Griffgehäuse ist, das aus mindestens zwei Teilschalen gebildet ist, wobei das Bedienelement, das Einstellelement, das Stellgetriebe und die Anschlagelemente in einer gemeinsamen Teilschale des Griffgehäuses gelagert und fixiert sind. Vorteilhaft kann diese Teilschale des Griffgehäuses mit einer üblichen weiteren Teilschale eines Griffgehäuses verbunden werden. Dadurch kann ein Arbeitsgerät mit einstellbarem Zwischenanschlag bis auf die Teilschale des Griffgehäuses, in der das Bedienelement, das Einstellelement, das Stellgetriebe und die Anschlagelemente angeordnet sind, identisch zu einem Arbeitsgerät ohne einstellbaren Zwischenanschlag ausgebildet werden. Auch eine Nachrüstung eines einstellbaren Zwischenanschlags ist dadurch auf einfache Weise möglich.

Vorteilhaft ist das Bedienelement ein Gashebel, der einen Betätigungsabschnitt, der vom Bediener zu betätigen ist, und einen Befestigungsabschnitt, an dem ein Übertragungselement zur Übertragung der Stellbewegung des Gashebels auf den Antriebsmotor festlegbar ist, umfasst. Die relative Lage von Betätigungsabschnitt und Befestigungsabschnitt ist vorteilhaft einstellbar. Dadurch kann auf einfache Weise die Länge des Übertragungselements, insbesondere eines Gaszugs, justiert werden. Vorteilhaft ist an dem Betätigungsabschnitt ein Anschlagelement festgelegt. Dadurch wirkt der Zwischenanschlag unmittelbar am Betätigungsabschnitt des Gashebels, den der Bediener betätigt.

Das Bedienelement ist vorteilhaft in Richtung auf seine Nullstellung, also seine unbetätigte Stellung, federbeaufschlagt. Dadurch wird das Bedienelement beim Loslassen in die Nullstellung zurückgestellt. Die Bedienkraft, die zur Verstellung des Bedienelements um einen Verstellweg benötigt wird, ist vor dem Erreichen des Zwischenanschlags und nach dem Überwinden des Zwischenanschlags, also in Betätigungsrichtung beidseits des Zwischenanschlags, vorteilhaft etwa gleich groß. Die Rückstellung in die unbetätigte Position erfolgt demnach ohne zusätzliche Kraft durch den Zwischenanschlag allein aufgrund der üblichen Federbelastung des Betätigungselements. Es können jedoch auch unterschiedliche benötigte Bedienkräfte vor dem Erreichen und nach dem Überwinden des Zwischenanschlags vorgesehen sein. Dabei ist die vor dem Erreichen des Zwischenanschlags zur Verstellung des Bedienelements um einen Verstellweg benötige Bedienkraft vorteilhaft kleiner als nach dem Überwinden des Zwischenanschlags. Die am Bedienelement wirkend Kraft je Bedienweg ist demnach nach dem Überwinden des Zwischenanschlags größer als vor dem Erreichen des Zwischenanschlags. Nach dem Überwinden des Zwischenanschlags wird demnach eine größere Kraft je Verstellweg zur Verstellung des Bedienelements in Richtung auf seine vollständig betätigte Stellung benötigt. Dadurch wird das Erreichen und Überwinden des Zwischenanschlags für den Bediener besser spürbar.

Ausführungsbeispiele der Erfindung werden im Folgenden anhand der Zeichnung erläutert. Es zeigen:
- Fig. 1: eine schematische Darstellung eines von einem Bediener geführten Freischneiders,
- Fig. 2: den Handgriff des Freischneiders aus Fig. 1 in perspektivischer Darstellung,
- Fig. 3: eine schematische Darstellung der Bedienvorrichtung und des Antriebsmotors des Freischneiders,
- Fig. 4: einen Schnitt durch den Handgriff im Bereich des Gashebels in Nullstellung des Gashebels,
- Fig. 5: einen vergrößerten Ausschnitt aus Fig. 4,
- Fig. 6: die Schnittdarstellung aus Fig. 4 mit am Zwischenanschlag angeordnetem Gashebel,
- Fig. 7: die Schnittdarstellung aus Fig. 4 in Maximalstellung des Gashebels,
- Fig. 8: ein Diagramm, das den Verlauf der Bedienkraft über dem Betätigungsweg schematisch zeigt,
- Fig. 9 und 10: perspektivische Darstellungen des Halteelements des Arbeitsgeräts,
- Fig. 11 und 12: perspektivische Darstellungen des Einstellelements des Arbeitsgeräts,
- Fig. 13: die Schnittdarstellung aus Fig. 4 mit dem Zwischenanschlag benachbart zur Maximalstellung,
- Fig. 14: die Schnittdarstellung aus Fig. 4 mit dem Zwischenanschlag benachbart zur Nullstellung,
- Fig. 15 und 16: schematische Darstellungen von Ausführungsbeispielen der Bedienvorrichtung,
- Fig. 17: eine Schnittdarstellung durch ein Ausfuhrungsbeispiel eines Handgriffs im Bereich des Gashebels in Maximalstellung des Gashebels,
- Fig. 18: ein Diagramm, das den Verlauf der Bedienkraft über dem Betätigungsweg für das Ausführungsbeispiel gemäß Fig. 17 schematisch zeigt,
- Fig. 19: eine schematische Darstellung eines Ausführungsbeispiels der Bedienvorrichtung und des Antriebsmotors des Freischneiders,
- Fig. 20: einen vergrößerten Ausschnitt aus Fig. 20,
- Fig. 21: ein weiteres Ausführungsbeispiel eines Handgriffs in einer Schnittdarstellung entsprechend Fig. 5.

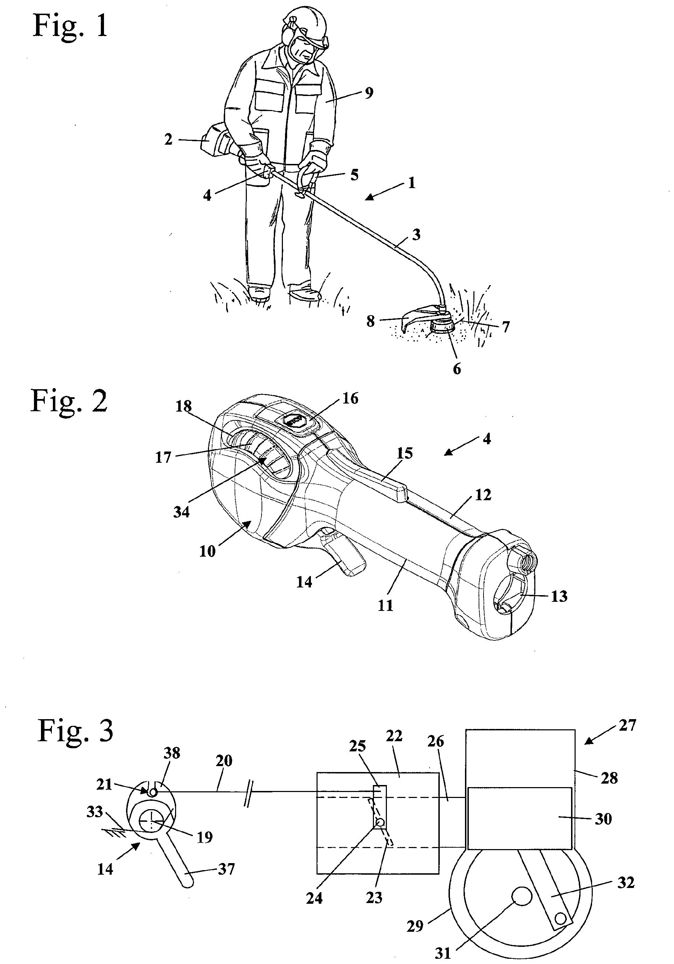

Fig. 1 zeigt als Ausführungsbeispiel für ein Arbeitsgerät ein handgeführtes Arbeitsgerät, nämlich einen Freischneider 1. Die im Folgenden beschriebene Gestaltung eines Zwischenanschlags kann jedoch vorteilhaft auch bei anderen Arbeitsgeräten, insbesondere bei anderen handgeführten Arbeitsgeräten, insbesondere bei Sprühgeräten, Blasgeräten, Heckenscheren, Olivenerntern oder dgl., eingesetzt werden. Bei Blasgeräten und Sprühgeräten ist das Werkzeug das den Arbeitsluftstrom fordernde Gebläserad. Bei Erntegeräten wie Olivenerntern oder dgl. wird das Werkzeug durch die in den Baum oder Strauch eingreifenden bewegten Finger, Haken oder dgl. gebildet.

Der Freischneider 1 besitzt ein Motorgehäuse 2, in dem ein in Fig. 1 nicht gezeigter Antriebsmotor angeordnet ist. Das Motorgehäuse 2 ist über ein Führungsrohr 3 mit einem Mähkopf 6 verbunden, aus dem ein Schneidfaden 7 ragt. Der Mähkopf 6 ist rotierend angetrieben. Der Flugkreis des Schneidfadens 7 ist teilweise von einem Schutz 8 abgedeckt. Am Führungsrohr 3 sind ein Handgriff 4 und ein Bügelgriff 5 festgelegt, an denen ein Bediener 9 den Freischneider 1 hält und führt. Das Führungsrohr 3 ragt durch den Handgriff 4. Anstatt Handgriff 4 und Bügelgriff 5 kann am Führungsrohr 2 ein Grifflenker festgelegt sein, und der Handgriff 4 kann auf eines der Enden des Grifflenkers aufgesteckt sein.

Fig. 2 zeigt den Handgriff 4 im Einzelnen. Der Handgriff 4 ist aus zwei Teilschalen 11 und 12 aufgebaut, die gemeinsam eine Öffnung 13 für das Führungsrohr 3 begrenzen. Die Teilschalen 11 und 12 sind in einer Teilungsebene miteinander verbunden, die sich in Längsrichtung des Führungsrohrs 3 erstreckt. Die Teilschalen 11 und 12 bilden zusammen ein Griffgehäuse 10. Am Griffgehäuse 10 ist ein Gashebel 14 schwenkbar gelagert. An der dem Gashebel 14 gegenüberliegenden Seite des Griffgehäuses 10 ragt eine Gashebelsperre 15 aus dem Griffgehäuse 10, die ebenfalls am Griffgehäuse 10 schwenkbar gelagert ist. Der Handgriff 4 besitzt einen Stoppschalter 16 sowie ein Einstellelement 17. Benachbart zum Stoppschalter 16 weist das Griffgehäuse 10 eine Aussparung 18 auf, die das im Griffgehäuse 10 angeordnete Einstellelement 17 freigibt, so dass dieses vom Bediener 9 betätigt werden kann. Das Einstellelement 17 besitzt eine Riffelung 34, die ein einfaches Verstellen des Einstellelements 17 ermöglicht. Auch eine andere Oberflächenstruktur des Einstellelements 17 kann vorteilhaft sein.

Wie Fig. 3 schematisch zeigt, besitzt der Gashebel 14 einen Betätigungsabschnitt 37 und einen Befestigungsabschnitt 38. Beide Abschnitte 37 und 38 sind um die gleiche Schwenkachse 19 schwenkbar gelagert. Am Betätigungsabschnitt 37 wirkt eine Rückstellfeder 33, die den Betätigungsabschnitt 37 und damit auch den Befestigungsabschnitt 38 in seine Nullstellung zurückstellt, wenn der Bediener 9 den Betätigungsabschnitt 37 nicht betätigt.

Am Befestigungsabschnitt 38 ist eine Aufnahme 21 für einen Gaszug 20 ausgebildet, an der der Gaszug 20 eingehängt ist. Die beiden Abschnitte 37 und 38 des Gashebels 14 sind relativ zueinander verstellbar, um die Länge des Gaszugs 20 einzustellen.

Wie Fig. 3 zeigt, ist der Antriebsmotor als Verbrennungsmotor 27 ausgebildet, insbesondere als Einzylindermotor. Der Verbrennungsmotor 27 ist vorteilhaft ein Zweitaktmotor oder ein gemischgeschmierter Viertaktmotor. Der Antriebsmotor kann jedoch auch ein Elektromotor sein, der insbesondere über ein Stromkabel, eine Batterie oder einen Akkumulator mit Energie versorgt wird. Der Verbrennungsmotor 27 besitzt einen Zylinder 28, in dem ein Kolben 30 hin- und hergehend gelagert ist. Der Kolben 30 treibt über ein Pleuel 32 eine in einem Kurbelgehäuse 29 drehbar gelagerte Kurbelwelle 31 rotierend an. Die Kurbelwelle 31 treibt das Werkzeug des Arbeitsgeräts, im Ausführungsbeispiel den Mähkopf 6 des Freischneiders 1 an. Zur Zufuhr von Kraftstoff/Luft-Gemisch mündet am Verbrennungsmotor 27 ein Ansaugkanal 26, dessen Einlassöffnung vorteilhaft vom Kolben 30 schlitzgesteuert ist. Der Ansaugkanal 26 ist mindestens teilweise in einem Vergaser 22 geführt, in dem der angesaugten Verbrennungsluft Kraftstoff zugeführt wird. Im Vergaser 22 ist eine Drosselklappe 23 mit einer Drosselwelle 24 schwenkbar gelagert. Auf der Drosselwelle 24 ist an der Außenseite des Gehäuses des Vergasers 22 ein Drosselhebel 25 fixiert, an dem der Gaszug 20 angreift. Anstatt eines Vergasers 22 kann auch ein Drosselgehäuse für die Drosselklappe 23 vorgesehen sein, und der Kraftstoff kann separat, beispielsweise über ein Einspritzventil, direkt ins Kurbelgehäuse 29, in den Ansaugkanal 26 oder in den Zylinder 28 zugeführt werden.

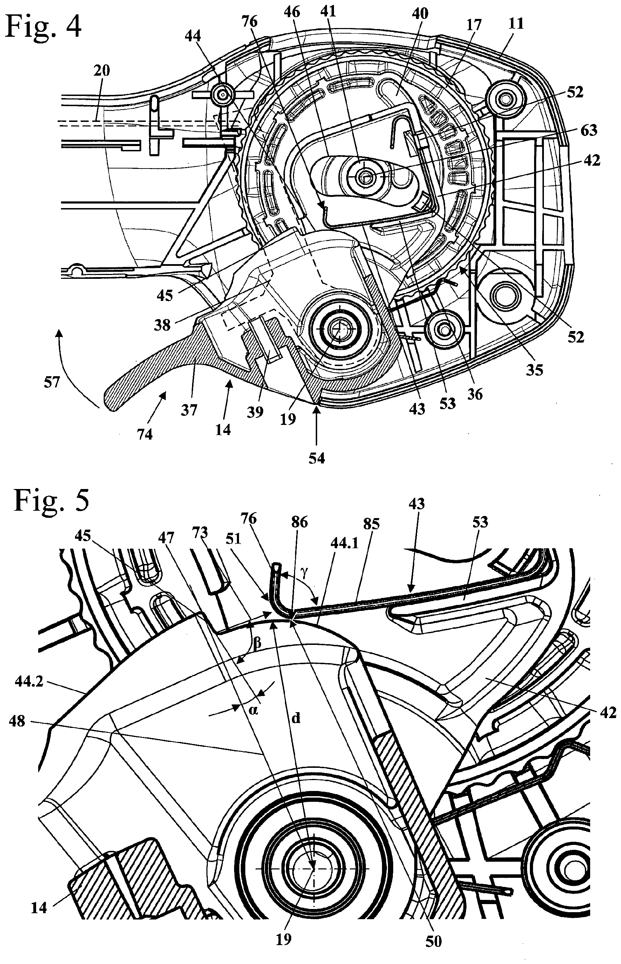

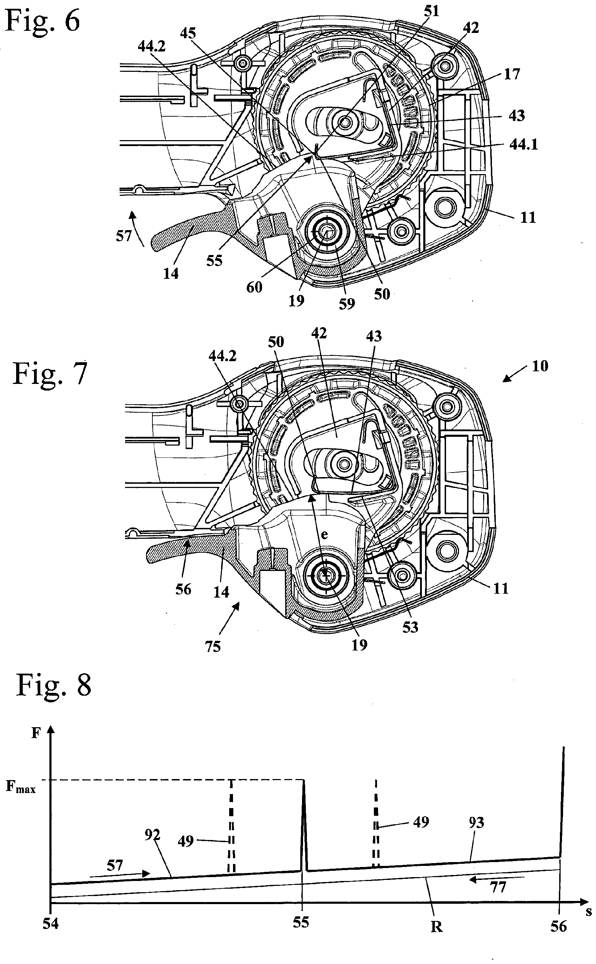

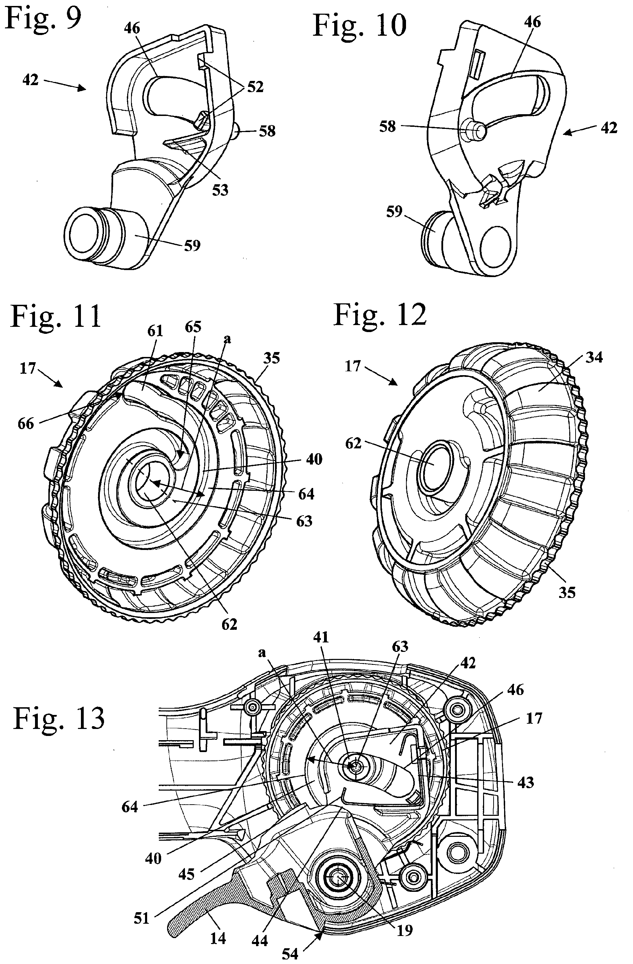

Bei einem Freischneider 1 ist es häufig wünschenswert, den Verbrennungsmotor 27 nicht bei maximaler Drehzahl zu betreiben, sondern bei einer verringerten Drehzahl, um ein optimales Schnittergebnis zu erreichen. Um das Halten des Gashebels 14 über einen längeren Zeitraum in einer nur teilweise betätigten Stellung zu erleichtern, ist ein Zwischenanschlag 55 (Fig. 6) vorgesehen, dessen Position über das Einstellelement 17 eingestellt werden kann. Wie Fig. 4 zeigt, ist das Einstellelement 17 als Stellrad ausgebildet, das an seiner ins Gehäuseinnere des Griffgehäuses 10 weisenden Seite eine spiralförmige Positioniernut 40 trägt. In die Positioniernut 40 greift ein Positionierzapfen 58 (Fig. 9) ein, der an einem Halteelement 42 fixiert ist. Wie Fig. 4 zeigt, ist das Halteelement 42 um die Schwenkachse 19 des Gashebels 14 schwenkbar gelagert und besitzt eine Führungsnut 46, in die ein Führungszapfen 41 ragt. Der Führungszapfen 41 wird vorteilhaft durch den Kopf einer Befestigungsschraube für das Einstellelement 17 gebildet. Die Führungsnut 46 verläuft kreisbogenförmig um die Schwenkachse 19. Am Halteelement 42 ist eine Feder 43 festgelegt. Die Feder 43 ist als Blattfeder ausgebildet und über Haltestege 52 am Halteelement 42 fixiert. Die Feder 43 besitzt ein freies Ende 76, an dem die Feder 43 gebogen ausgebildet ist. Das freie Ende 76 der Feder 43 liegt an einer Gleitfläche 44 an, die am Betätigungsabschnitt 37 des Gashebels 14 ausgebildet ist. Die Gleitfläche 44 verläuft näherungsweise kreisbogenförmig um die Schwenkachse 19. Die Feder 43 besteht vorteilhaft aus Metall, insbesondere aus Federstahl. Auch eine Ausbildung der Feder 43 aus Kunststoff kann jedoch vorteilhaft sein.

An seinem Außenumfang besitzt das Einstellelement 17 eine in Fig. 4 gezeigte Rastkontur 35, die mit einer Rastfeder 36 zusammenwirkt. Dadurch werden Raststellungen des Einstellelements 17 definiert. Aufgrund der Anordnung am Außenumfang des Einstellelements 17 ergibt sich ein sehr geringer Stellwinkel zwischen zwei Rastschritten. Die Positioniernut 40 und der Positionierzapfen 58 (Fig. 9) am Halteelement 42 bilden ein Stellgetriebe, das eine sehr feinfühlige Einstellung der Position des Zwischenanschlags 55 (Fig. 6) ermöglicht. Es kann auch vorgesehen sein, dass die Rastkontur 35 an einem Innenumfang des Einstellelements 17 angeordnet ist.

Fig. 4 zeigt auch die konstruktive Gestaltung des Betätigungsabschnitts 37 und des Befestigungsabschnitts 38. Der Befestigungsabschnitt 38 ist ebenfalls um die Schwenkachse 19 schwenkbar gelagert. Zwischen dem Betätigungsabschnitt 37 und dem Befestigungsabschnitt 38 wirkt eine Einstellschraube 39, die in den Betätigungsabschnitt 37 eingeschraubt ist und am Befestigungsabschnitt 38 anliegt. Durch Verdrehen der Einstellschraube 39 kann die Position der Drosselklappe 23 bei unbetätigtem Gashebel 14 verändert und dadurch eingestellt werden. Dadurch kann sichergestellt werden, dass beim Verschwenken des Gashebels 14 eine vollständige Verschwenkung der Drosselklappe 23 von der geschlossenen Stellung in die vollständig geöffnete Stellung möglich ist. Die Leerlaufstellung der Drosselklappe 23, also die Stellung, in der die Drosselklappe 23 bei unbetätigtem Gashebel 14 angeordnet ist, kann justiert werden. Wie Fig. 4 zeigt, ist zwischen dem Betätigungsabschnitt 37 und der Teilschale 11 ein Nullanschlag 54 gebildet, an dem der Gashebel 14 aufgrund der Kraft der Rückstellfeder 33 (Fig. 3) in der in Fig. 4 gezeigten Nullstellung 74 anliegt. Zum Gasgeben wird der Betätigungsabschnitt 37 in einer Betätigungsrichtung 57 betätigt.

Wie Fig. 5 zeigt, besitzt die Gleitfläche 44 einen ersten Abschnitt 44.1, an dem die Feder 43 in Nullstellung 74 des Gashebels 14 mit einem ersten Anlagebereich 50 anliegt. Der Anlagebereich 50 liegt an einer Anlagestelle 86 der Gleitfläche 44 an. Die Gleitfläche 44 besitzt außerdem einen zweiten Abschnitt 44.2. Zwischen dem ersten Abschnitt 44.1 und dem zweiten Abschnitt 44.2 ist eine Anschlagfläche 45 angeordnet, die eine Rampe zwischen den beiden Abschnitten 44.1 und 44.2 bildet. Der erste Abschnitt 44.1 besitzt dabei einen geringeren Abstand zur Schwenkachse 19 als der zweite Abschnitt 44.2. Die Anschlagfläche 45 ist gegenüber der Bewegungsrichtung 73, in der sich die Gleitfläche 44 bei Betätigen des Gashebels 14 relativ zu der Feder 43 bewegt, um einen Winkel β geneigt, der vorteilhaft mehr als 45° beträgt. Der Winkel β beträgt vorteilhaft mehr als 65°, insbesondere mehr als 70°. Als besonders vorteilhaft wird ein Winkel β von etwa 75° bis etwa 85° angesehen. Der Abstand d des ersten Abschnitts 44.1 der Gleitfläche 44 zur Drehachse 19 ist dabei über den gesamten Abschnitt 44.1 konstant. Beim Verstellen des Gashebels 14 ändert sich der Weg, um den die Feder 43 gespannt ist, nicht, solange die Feder 14 im ersten Abschnitt 44.1 anliegt.

Die Anschlagfläche 45 geht an einem Ende 47 in den zweiten Abschnitt 44.2 der Gleitfläche 44 über. Die Verbindung der Schwenkachse 19 mit dem Ende 47 schließt mit der Anschlagfläche 45 einen Winkel α ein, der im Ausführungsbeispiel etwa 8° bis etwa 10° beträgt. Der Winkel α ist vorteilhaft kleiner, insbesondere deutlich kleiner als 45°. Wie Fig. 5 auch zeigt, besitzt die Feder 43 einen zweiten Anlagebereich 51, der der Anschlagfläche 45 zugewandt liegt. Der Anlagebereich 50 ist am geraden Abschnitt 85 benachbart zum umgebogenen Ende 76 angeordnet. Das Ende 76 der Feder 43 ist umgebogen. Das Ende 76 schließt mit dem geraden Abschnitt 85 einen Winkel γ ein, der vorteilhaft mindestens 80° beträgt. Das Ende 76 geht mit einem Radius in den angrenzenden geraden Abschnitt 85 über. Der Anlagebereich 51 ist in dem Bereich zwischen dem Ende 76 und dem angrenzenden geraden Abschnitt 85 angeordnet, in dem die Feder 43 gebogen verläuft. Aufgrund der gebogenen Ausbildung der Feder 43 zwischen dem Ende 76 und dem Abschnitt 85 wird verhindert, dass die Feder 43 an der Anschlagfläche 45 einhaken kann. Aufgrund der gebogenen Gestaltung wird auf einfache Weise sichergestellt, dass die Anschlagfläche 45 eine Kraft auf die Feder 43 in Richtung auf den zweiten Abschnitt 44.2 der Gleitfläche 44 ausübt und die Feder 43 elastisch verformt wird, wenn der Gashebel 14 weiter in Betätigungsrichtung 57 verschwenkt wird. Am Halteelement 42 ist ein Anlagesteg 53 ausgebildet, an dem die Feder 43 anliegen kann, wenn der erste Anlagebereich 50 am ersten Abschnitt 44.1 der Gleitfläche 44 anliegt.

Fig. 6 zeigt die Anordnung bei weiterer Betätigung des Gashebels 14. Der Gashebel 14 ist in Fig. 6 bis zum Erreichen des Zwischenanschlags 55 in Betätigungsrichtung 57 gedrückt. Der Zwischenanschlag 55 wird durch den zweiten Anlagebereich 51 und die Anschlagfläche 45 gebildet. Auch der erste Anlagebereich 50 liegt bei Erreichen des Zwischenanschlags 55 am Gashebel 14, und zwar am ersten Abschnitt 44.1 der Gleitfläche 44, an. Die Position des Einstellelements 17 ist gegenüber der in den Figuren 4 und 5 gezeigten Stellung unverändert. Die Feder 43 ist dadurch ortsfest gegenüber dem Griffgehäuse 10 gehalten. Der Gashebel 14 bewegt sich gegenüber dem Griffgehäuse 10 und gegenüber der Feder 43.

Fig. 7 zeigt den Gashebel 14 nach weiterer Betätigung in Betätigungsrichtung 57 (Fig. 6) in Maximalstellung 75, in der der Gashebel 14 an einem am Griffgehäuse 10 ausgebildeten Endanschlag 56 anliegt. In dieser Stellung liegt der erste Anlagebereich 50 der Feder 43 am zweiten Abschnitt 44.2 der Gleitfläche 44 an. Die Feder 43 hat sich vom Anlagesteg 53 entfernt, und zwar aufgrund des vergrößerten Abstandes des zweiten Abschnitts 44.2 der Gleitfläche 44 zur Schwenkachse 19. Der Abschnitt 44.2 besitzt über seine gesamte Länge einen konstanten Abstand e zur Drehachse 19. Dadurch wird die Feder 43 bei einer Bewegung des Gashebels 14, während der die Feder 43 am zweiten Abschnitt 44.2 der Gleitfläche 44 anliegt, nicht weiter verformt.

Fig. 8 zeigt den Verlauf der Bedienkraft F über dem Bedienweg s des Gashebels 14. Die Bedienkraft F nimmt bei Betätigung des Gashebels 14 ausgehend vom Nullanschlag 54 in Betätigungsrichtung 57 zunächst linear zu, wie die Linie 92 zeigt. Der Anstieg der Bedienkraft F wird im Wesentlichen durch die Rückstellfeder 33 und ggf. durch eine weitere Rückstellfeder der Drosselklappe 23 bestimmt. Die Feder 43 wirkt in etwa in Richtung auf die Schwenkachse 19 auf die Gleitfläche 44 und übt dadurch kein Moment auf den Gashebel 14 aus. Es kann jedoch auch ein anderer Verlauf der Gleitfläche 44 oder eine andere Ausrichtung der Feder 43 vorteilhaft sein, die ein zusätzliches Moment auf den Gashebel 14 in Richtung auf seine Nullstellung 74 (Fig. 5) ausübt. Bei Erreichen des Zwischenanschlags 55 steigt die Bedienkraft F sehr stark auf eine maximale Bedienkraft Fₘₐₓ an. Der Anstieg der Bedienkraft F ergibt sich aufgrund der elastischen Verformung der Feder 43 an der Anschlagfläche 45. Da die Anschlagfläche 45 zur Bewegungsrichtung 73 (Fig. 5) sehr steil ausgerichtet ist und dadurch nur ein geringer Anteil der Betätigungskraft F in der für die elastische Verformung der Feder 43 benötigten Richtung wirkt, ergibt sich eine sehr hohe maximale Bedienkraft Fₘₐₓ. Über den Winkel β bzw. den entsprechenden Winkel α kann die Größe der maximalen Bedienkraft Fₘₐₓ konstruktiv festgelegt werden. Sobald der erste Anlagebereich 50 der Feder 43 am zweiten Abschnitt 44.2 der Gleitfläche 44 anliegt, fällt die Bedienkraft F wieder stark ab. Die Bedienkraft fällt im gezeigten Ausführungsbeispiel auf einen Wert ab, der näherungsweise auf der Verlängerung der Kennlinie vom Nullanschlag 54 zum Zwischenanschlag 55 liegt. Die Bedienkraft F steigt bis zum Erreichen des Endanschlags 56 weiter linear an, wie die Linie 93 zeigt. Die Linie 93 liegt dabei im Ausführungsbeispiel in Verlängerung der Linie 92 und besitzt die gleiche Steigung wie die Linie 92.

Wie in Fig. 8 durch die gestrichelten Linien 49 angedeutet, kann die Position des Zwischenanschlags 55 verstellt werden, und zwar durch Verdrehen des Einstellelements 17. Vorteilhaft kann die Position des Zwischenanschlags 55 im gesamten Bereich zwischen Nullanschlag 54 und Endanschlag 56 verstellt werden. Die Auslegung ist dabei vorteilhaft so gewählt, dass die Position des Zwischenanschlags 55 im Betrieb eingestellt werden kann. Vorteilhaft kann über das Einstellelement 17 bei am Zwischenanschlag 55 anliegender Feder 43 der Gashebel 14 verstellt werden. Dadurch kann die Position des Zwischenanschlags 55 im Betrieb gleichzeitig mit der gewünschten Gashebelposition eingestellt werden.

In Fig. 8 ist auch die Rückstellkraft R am Gashebel 14, die durch die Rückstellfeder 33 aufgebracht wird, wenn der Gashebel 14 losgelassen wird und sich in einer Gegenrichtung 77 zur Betätigungsrichtung 57 bewegt, eingezeichnet. Die Rückstellkraft R verläuft linear, die Federkonstante der Rückstellfeder 33 ist demnach konstant. Durch den Zwischenanschlag 55 wird keine zusätzliche Rückstellkraft R vor oder nach dem Zwischenanschlag 55 ausgeübt. Vorteilhaft übt auch der Zwischenanschlag 55 selbst keine zusätzliche Rückstellkraft R auf den Gashebel 14 aus.

Die Figuren 9 und 10 zeigen die Gestaltung des Halteelements 42 im Einzelnen. Das Halteelement 42 besitzt einen Lagerzapfen 59, der, wie Fig. 6 zeigt, den Gashebel 14 durchragt und als Lager für den Gashebel 14 dient. Der Lagerzapfen 59 ist seinerseits auf einem in Fig. 6 ebenfalls gezeigten Gehäusezapfen 60 gelagert. Die Figuren 9 und 10 zeigen auch den Positionierzapfen 58, der in die Positioniernut 40 ragt.

Die Figuren 11 und 12 zeigen das Einstellelement 17. Das Einstellelement 17 ist näherungsweise schalenförmig ausgebildet. Der Bereich des Halteelements 42, der die Feder 43 hält, der Positionierzapfen 58 sowie der Bereich, der die Führungsnut 46 aufweist, sind innerhalb des durch den Rand des Einstellelements 17 umschlossenen Raums angeordnet. Dadurch ergibt sich eine geringe Baugröße der Anordnung. Das Einstellelement 17 ist um eine Drehachse 63 drehbar gelagert, die auch in Fig. 4 gezeigt ist. Das Einstellelement 17 besitzt eine Lageröffnung 62, die die Drehachse 63 umgibt und in die ein nicht gezeigter Lagerzapfen des Griffgehäuses 10 ragt. An der dem Halteelement 42 zugewandten Seite weist das Einstellelement 17 die Positioniernut 40 auf. Die Positioniernut 40 erstreckt sich spiralförmig um die Drehachse 63. Die Positioniernut 40 besitzt ein inneres Ende 65 und ein äußeres Ende 66. Benachbart zum äußeren Ende 66 besitzt die Positioniernut 40 einen Endabschnitt 61, in dem die Positioniernut 40 steiler verläuft, also stärker zur tangentialen Richtung um die Drehachse 63 geneigt ist. Dadurch kann der Zwischenanschlag 55 nicht in einem Bereich unmittelbar vor Erreichen der Vollgasstellung des Gashebels 14 fixiert werden. Die Ausrichtung des Endabschnitts 61 ist so gewählt, dass der Gashebel den Zwischenanschlag 55 bei Anordnung des Positionierzapfens 58 im Endabschnitt 61 bis in seine Endstellung drückt.

Die Positioniernut 40 besitzt eine Außenwand 64, gegen die der Positionierzapfen 58 (Fig. 9) beim Überdrücken des Zwischenanschlags 55 gedrückt wird. Die Außenwand 64 besitzt zur Drehachse 63 einen Abstand a, der sich vom inneren Ende 65 zum äußeren Ende 66 kontinuierlich vergrößert. Die Veränderung des Abstands a ist dabei so gering, dass die Feder 43 im üblichen Betrieb ortsfest angeordnet ist und sich am Zwischenanschlag 55 elastisch verformt. Die von der Feder 43 am Zwischenanschlag 55 auf das Einstellelement 17 in Drehrichtung des Einstellelements 17 ausgeübte Kraft ist zu gering und die wirkenden Reibungskräfte sind zu hoch, um das Einstellelement 17 zu verdrehen.

Fig. 13 zeigt die Vorrichtung in einer Stellung, in der der Zwischenanschlag 55 in einer Stellung steht, die der Vollgasstellung entspricht. Die Vollgasstellung ist dabei die Stellung des Gashebels 14, in der der Gashebel 14 am Endanschlag 56 anliegt. Der Positionierzapfen 58 (Figuren 9 und 10) befindet sich am äußeren Ende 66 der Positioniernut 40 (Fig. 11). Der Führungszapfen 41 ist benachbart zu einem Ende der Führungsnut 46 angeordnet.

Fig. 13 zeigt den Zwischenanschlag 55 in einer Stellung benachbart zu einer Stellung, die der Leerlaufstellung des Gashebels 14 entspricht. Die Leerlaufstellung des Gashebels 14 ist dabei die Stellung, in der der Gashebel 14 am Nullanschlag 54 anliegt. Der Positionierzapfen 58 (Figuren 9 und 10) ist benachbart zum inneren Ende 65 der Positioniernut 40 (Figuren 11 und 12) angeordnet. Sobald der Gashebel 14 geringfügig betätigt wird, gelangt der zweite Anlagebereich 51 in Kontakt mit der Anschlagfläche 45. Der Führungszapfen 41 befindet sich am anderen Ende der Führungsnut 46.

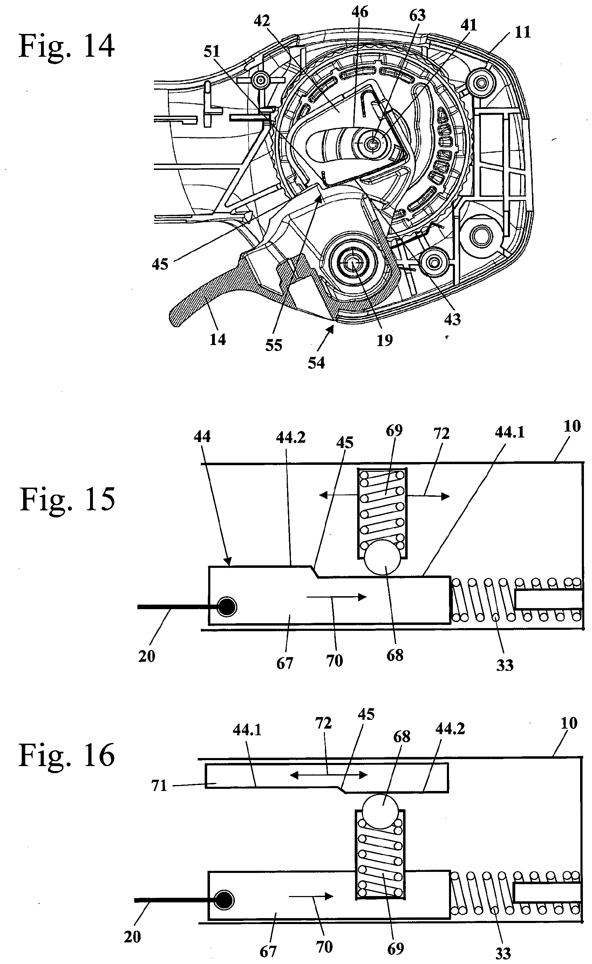

Die Figuren 15 und 16 zeigen Ausführungsbeispiele für die Gestaltung eines Zwischenanschlags 55, bei denen anstatt eines schwenkbar gelagerten Gashebels 14 ein Schieber 67 vorgesehen ist. Dabei kann der Schieber 67 direkt vom Bediener zu betätigen sein oder ein schwenkbarer Gashebel wirkt auf einen linear verschiebbaren Schieber 67. Der Schieber 67 ist zum Gasgeben in einer Betätigungsrichtung 70 verschiebbar, und zwar entgegen der Kraft einer Rückstellfeder 33, die in den schematischen Darstellungen in den Figuren 15 und 16 als Schraubendruckfeder dargestellt ist.

Beim Ausführungsbeispiel nach Fig. 15 besitzt der Schieber 67 die Gleitfläche 44 mit den beiden Abschnitten 44.1 und 44.2 und der Anschlagfläche 45. Im Griffgehäuse 10 ist ein gefedertes Element, nämlich eine Kugel 68 in Richtung eines Pfeils 72 verschiebbar angeordnet. Die Kugel 68 ist von einer Druckfeder 69 gefedert. Beim Betätigen des Schiebers 67 kommt die Kugel 68 mit der Anschlagfläche 45 in Kontakt. Dadurch steigt die Bedienkraft F zum weiteren Verschieben des Schiebers 67 stark an. Nach Überwinden der Anschlagfläche 45 liegt die Kugel 68 am zweiten Abschnitt 44.2 der Gleitfläche 44 an. Die Abschnitte 44.1 und 44.2 der Gleitfläche 44 verlaufen parallel zur Betätigungsrichtung 70, so dass sich hier nur eine geringe Bedienkraft ergibt, die im Wesentlichen von der Rückstellfeder 33 erzeugt wird. Auch eine andere Gestaltung des gefederten Elements kann vorteilhaft sein.

In Fig. 16 ist die Kugel 68 mit der Druckfeder 69 am Schieber 67 angeordnet, und die Gleitfläche 44 ist an einem Gleitstück 71 ausgebildet, das in Richtung eines Pfeils 72 im Griffgehäuse 10 verschiebbar gelagert ist. Hier ergibt sich ein entsprechender Anstieg und nach Überwinden des Zwischenanschlags 55 ein entsprechender Abfall der Bedienkraft F. In den Ausführungsbeispielen nach Fig. 15 und 16 bildet die Anschlagfläche 45 ebenfalls eine Rampe, so dass der Anschlag in Gegenrichtung zur Betätigungsrichtung 70, also beim Loslassen des Schiebers 67, nicht wirksam ist.

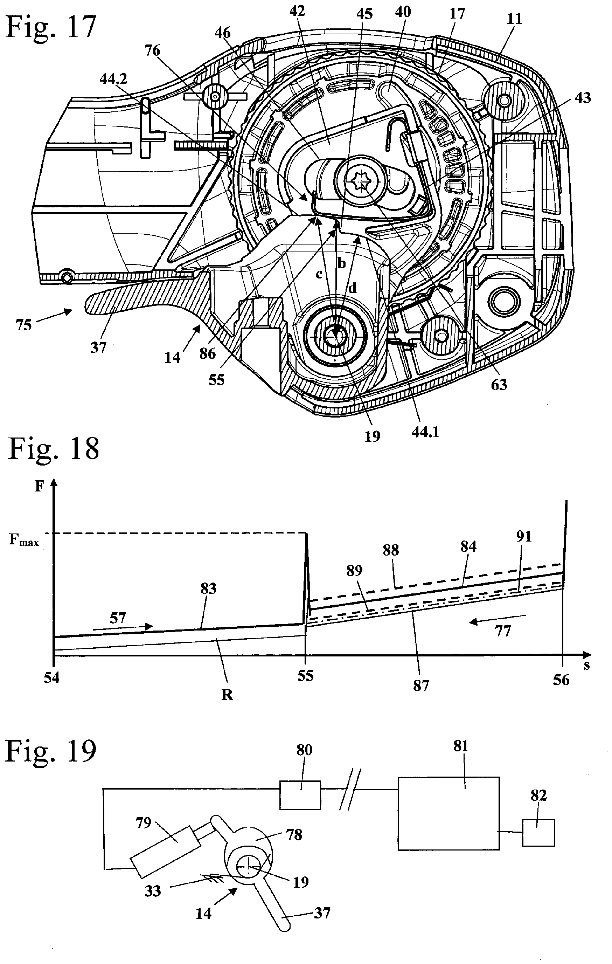

Fig. 17 zeigt ein Ausführungsbeispiel für den Gashebel 14 in Maximalstellung 75. Diese Stellung entspricht der in Fig. 7 für das erste Ausführungsbeispiel gezeigten Stellung. Gleiche Bezugszeichen wie in den vorangegangenen Figuren kennzeichnen einander entsprechende Elemente. Der Aufbau des in Fig. 17 gezeigten Handgriffs 4 entspricht dem des Handgriffs 4 aus den Figuren 2 bis 14. Der in Fig. 17 gezeigte Handgriff 4 unterscheidet sich in der Gestaltung der Gleitfläche 44 des Gashebels 14 vom Handgriff der Figuren 2 bis 14. Der erste Abschnitt 44.1 der Gleitfläche 44 ist entsprechend der in den Fig. 2 bis 14 gezeigten Gestaltung ausgebildet und besitzt einen kreisbogenförmigen Verlauf um die Schwenkachse 19. Der Abstand d der Gleitfläche 44.1 zur Drehachse 19 ist konstant. Der zweite Abschnitt 44.2 der Gleitfläche 44, an dem die Feder 43 nach Überwinden des Zwischenanschlags 55 anliegt, besitzt einen abweichenden Verlauf. Der Abschnitt 44.2 entfernt sich vom Zwischenanschlag 55 bis zu der Anlagestelle 86, an der die Feder 43 in Maximalstellung 75 des Gashebels 14 anliegt, zunehmend von der Schwenkachse 19. Unmittelbar nach dem Zwischenanschlag 55 besitzt der Abschnitt 44.2 der Gleitfläche 44 einen Abstand b zur Schwenkachse 19. Die Anlagestelle 86, an der die Feder 43 in Maximalstellung 75 des Gashebels 14 anliegt, besitzt zur Schwenkachse 19 einen Abstand c, der größer als der Abstand b ist. Der Abstand der Gleitfläche 44.2 zur Schwenkachse 19 vergrößert sich kontinuierlich vom Abstand b auf den Abstand c. Die Feder wird dadurch beim Bewegen des Gashebels 14 nach Überwinden des Zwischenanschlags 55 bis zur Maximalstellung 75 zunehmend gespannt. Die Bedienkraft F, die zur Verstellung des Gashebels 14 um einen vorgegebenen Verstellweg s (Fig. 18), also der Verschwenkung des Gashebels 14 um einen vorgegebenen Verstellwinkel, benötigt wird, ist vor dem Erreichen des Zwischenanschlags 55 kleiner als nach dem Erreichen des Zwischenanschlags 55.

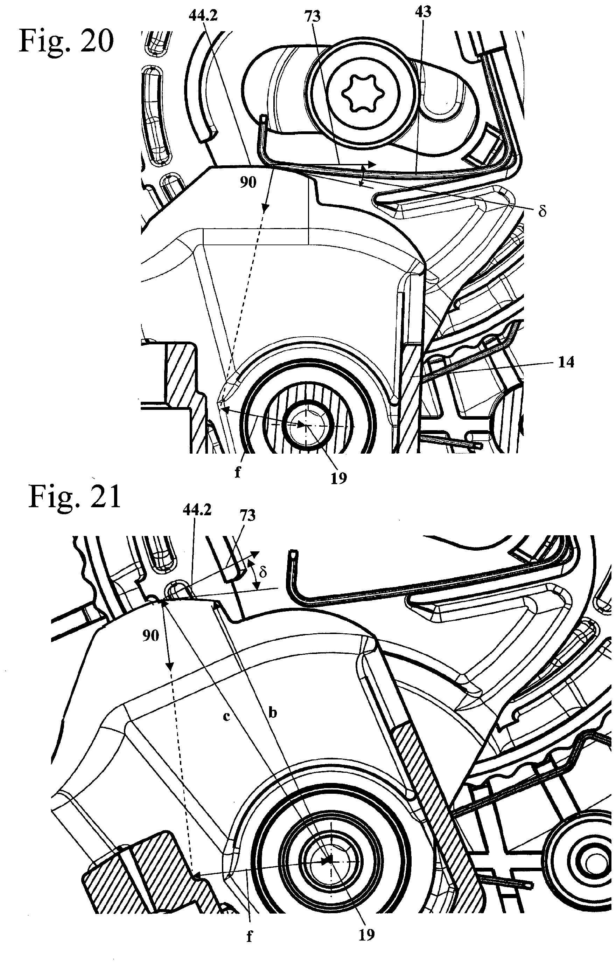

Der zweite Abschnitt 44.2 der Gleitfläche 44 verläuft nicht parallel, also an jeder Stelle der Gleitfläche 44 tangential zur Bewegungsrichtung 73 der Gleitfläche 44 sondern ist zur Bewegungsrichtung 73 geneigt. Dies ist vergrößert in Fig. 20 gezeigt. Die Tangente an die Gleitfläche 44 im Abschnitt 4.2 schließt mit der Bewegungsrichtung 73 der Gleitfläche 44 einen Winkel δ ein. Der Winkel δ kann vorteilhaft von etwa 3° bis etwa 30° betragen. Je größer der Winkel δ, umso größer ist die Rückstellkraft R, die auf den Gashebel 14 ausgeübt wird. Wie Fig. 20 auch zeigt, wirkt die Feder 34 senkrecht auf die Gleitfläche 44. Die Feder übt auf die Gleitfläche 44 eine Kraft 90 aus, deren Wirkrichtung zur Schwenkachse 19 einen Abstand f besitzt. Dadurch übt die Feder 43 auf den Gashebel 14 ein Moment aus, das entgegen der Betätigungsrichtung 57 (Fig. 6) wirkt.

Fig. 18 zeigt den Verlauf der Betätigungskraft für das in Fig. 17 gezeigte Ausführungsbeispiel. Eine erste Linie 83 zeigt den Verlauf der Bedienkraft F bis zum Zwischenanschlag. Bis zum Erreichen des Zwischenanschlags 55 steigt die Bedienkraft F linear und mit geringer Steigung an. Am Zwischenanschlag 55 ergibt sich aufgrund der steilen, rampenförmigen Anschlagfläche 45 ein sehr starker Kraftanstieg bis auf eine maximale Bedienkraft Fₘₐₓ. Dies entspricht dem Kraftverlauf der vorangegangenen Ausführungsbeispiele. Nach Überwinden des Zwischenanschlags 55 sinkt die Bedienkraft F auf einen Wert, der oberhalb der linearen Verlängerung der Linie 83 liegt. Die Bedienkraft F fällt nach Überwinden des Zwischenanschlags 55 nicht auf die Verlängerung der Linie 83 zurück, da die Feder 43 über die Kraft 90 ein zusätzliches Moment auf den Gashebel 14 ausübt, das der Betätigungskraft F entgegen wirkt. Die Bedienkraft F steigt bis zum Erreichen des Endanschlags 56 stärker an. Dies ist durch eine Linie 84 angedeutet, deren Steigung größer als die der Linie 83 ist. Aufgrund der erhöhten benötigten Bedienkraft F im zweiten Abschnitt 44.2 der Gleitfläche 44, also nach Überwinden des Zwischenanschlags 55, erhält der Bediener eine deutlichere Rückmeldung darüber, dass der Zwischenanschlag 55 bereits überwunden wurde. Die Rückstellkraft R ist nach Überwinden des Zwischenanschlags 55, also wenn die Feder 43 im zweiten Abschnitt 44.2 anliegt, deutlich größer als vor Erreichen des Zwischenanschlags 55. Dies zeigt die Linie 87. Es kann auch vorgesehen sein, dass die Linie 84 nach dem Erreichen des Zwischenanschlags 55 auf die Verlängerung der Linie 83 zurückfällt und eine größere Steigung aufweist als die Linie 83. Dies ist durch die strichpunktierte Linie 91 angedeutet. Die gewünschte Charakteristik des Verlaufs der Bedienkraft F und der Rückstellkraft R kann durch geeignete Auslegung des zweiten Abschnitts 44.2 der Gleitfläche 44 eingestellt werden.

Beim Loslassen des Gashebels 14 ergibt sich eine Rückstellkraft R, die parallel zu den Linien 84 und 83 verläuft. Die Rückstellkraft R stellt den Gashebel 14 in seine Nullstellung 74 (Fig. 4) zurück. Für den Bereich zwischen Zwischenanschlag 55 und Endanschlag 56 ist die Rückstellkraft R von einer Linie 87 dargestellt.

Fig. 19 zeigt schematisch ein Ausführungsbeispiel, bei dem der Gashebel 14 auf einen Elektromotor 81 wirkt. Der Gashebel 14 umfasst den Betätigungsabschnitt 37, der verstellbar mit einem Betätigungsabschnitt 78 verbunden ist. Die Verstellung kann entsprechend dem in den Figuren 3 und 4 gezeigten Ausführungsbeispiel über eine Einstellschraube 39 erfolgen. Es kann jedoch auch vorgesehen sein, dass die Betätigungsabschnitte 37 und 78 fest miteinander verbunden sind, oder dass der Gashebel 14 einteilig ausgebildet ist. Der Betätigungsabschnitt 78 wirkt auf ein Potentiometer 79, das mit einer Steuereinrichtung 80 verbunden ist. In Abhängigkeit der Stellung des Gashebels 14 variiert das vom Potentiometer 79 an die Steuereinrichtung 80 abgegebene Signal. Die Steuereinrichtung 80 steuert den Elektromotor 81 entsprechend an. Der Elektromotor 81 ist mit einer Energieversorgung 82 verbunden, die beispielsweise eine Batterie, ein Akku oder ein Anschlusskabel zur Verbindung mit einer externen Energieversorgung sein kann. Alle gezeigten Ausführungsbeispiele können sowohl mit einem Verbrennungsmotor 27 als auch mit einem Elektromotor 81 zum Einsatz kommen.

Fig. 21 zeigt ein Ausführungsbeispiel für den Abschnitt 44.2 der Gleitfläche 44. Die Gleitfläche 44 ist im zweiten Abschnitt 44.2 zur Bewegungsrichtung 73 um einen Winkel δ geneigt, der deutlich größer als der in Fig. 17 gezeigte Winkel δ ist. Dadurch ergibt sich bei dem in Fig. 21 gezeigten Ausführungsbeispiel eine größere Bedienkraft F und eine größere Rückstellkraft R auf den Gashebel 14, wenn die Feder 43 im zweiten Abschnitt 44.2 anliegt. Die Kraft 90, die die Feder 43 auf die Gleitfläche 44 in Maximalstellung 75 (Fig. 17) ausübt, wirkt nicht in Richtung auf die Schwenkachse 19, sondern in einem Abstand f zur Schwenkachse 19 und übt dadurch ein Moment auf den Gashebel 14 entgegen der Betätigungsrichtung 57 (Fig. 4) aus. Wie die Fig. 20 und 21 zeigen, ist der Abstand f bei dem in Fig. 20 gezeigten Ausführungsbeispiel größer als bei dem in Fig. 21 gezeigten Ausführungsbeispiel. Dadurch ergibt sich die größere Bedienkraft F und eine größere Rückstellkraft R.

Der Verlauf der Bedienkraft F zwischen Zwischenanschlag 55 und Endanschlag 56 ist in Fig. 18 mit einer gestrichelten Linie 88 eingezeichnet. Im Ausführungsbeispiel verläuft die Linie 88 parallel zur Linie 84. Die Linie 88 ist parallel zur Linie 84 zu höheren Kräften F versetzt. Die Rückstellkraft R zwischen dem Zwischenanschlag 55 und dem Endanschlag 56 ist in Fig. 18 von einer gestrichelten Linie 89 gezeigt. Auch die Linie 89 verläuft oberhalb der Linie 87. Demnach ist auch die Rückstellkraft R bei dem in Fig. 21 gezeigten Ausführungsbeispiel größer als bei dem in Fig. 17 gezeigten Ausführungsbeispiel. Der Abstand c zwischen der Schwenkachse 19 des Gashebels 14 und dem Bereich der Gleitfläche 44, an dem die Feder 43 in Maximalstellung 75 (Fig. 17) des Gashebels 14 anliegt, ist größer als der in Fig. 17 gezeigte Abstand c. Der Verlauf des zweiten Abschnitts 44.2 der Gleitfläche 44 ist dabei so gewählt, dass das am Gashebel 14 wirkende Moment in Rückstellrichtung, also entgegen der in Fig. 4 gezeigten Betätigungsrichtung 57, kontant ist.

Bis auf die Gestaltung des zweiten Abschnitts 44.2 entspricht das in Fig. 21 gezeigte Ausführungsbeispiel den in den vorangegangenen Figuren gezeigten Ausführungsbeispielen.

Die Linie 84, 88, 91, 93, die die Bedienkraft F bezogen auf den Verstellweg s angibt, kann im Bereich zwischen dem Zwischenanschlag 55 und dem Endanschlag 56 die gleiche oder eine andere, insbesondere größere Steigung haben als die Linie 83, 92, die den Verlauf der Bedienkraft F über dem Verstellweg s im Bereich zwischen dem Nullanschlag 54 und dem Zwischenanschlag 55 angibt. Die Linie 84, 88 kann gegenüber der Linie 83 zu größeren Bedienkräften F hin versetzt sein. Es kann jedoch auch vorgesehen sein, dass die Linie 93, die die Bedienkraft F bezogen auf den Verstellweg s im Bereich zwischen dem Zwischenanschlag 55 und dem Endanschlag 56 angibt, in Verlängerung der Linie 92 verläuft. Die Linie 92 gibt dabei die Bedienkraft F bezogen auf den Verstellweg s im Bereich zwischen dem Nullanschlag 54 und dem Zwischenanschlag 55 an. Es kann auch vorgesehen sein, dass die Bedienkraft F im Bereich zwischen Zwischenanschlag 55 und Endanschlag 56 konstant ist. Dies kann durch eine Ausrichtung der Gleitfläche 44 erreicht werden, an der die Feder 43 ein Moment erzeugt, das entgegen der von der Rückstellfeder 33 (Fig. 3) ausgeübten Kraft wirkt.

## Patentansprüche

1. Arbeitsgerät mit einem Antriebsmotor zum Antrieb mindestens eines Werkzeugs und mit einer Bedienvorrichtung für den Antriebsmotor, wobei die Bedienvorrichtung ein vom Bediener zu betätigendes Bedienelement umfasst, wobei das Bedienelement in einem Gehäuse beweglich gelagert ist und in einer Betätigungsrichtung (57, 70) von einer Nullstellung (74) bis zu einer Maximalstellung (75) verstellt werden kann, und wobei zwischen der Nullstellung (74) und der Maximalstellung (75) ein Zwischenanschlag (55) wirkt, dessen Position über ein Einstellelement (17) einstellbar ist, wobei das Bedienelement nach Erreichen des Zwischenanschlags (55) weiter bis zur Maximalstellung (75) betätigt werden kann, und wobei die Bedienkraft (F) zum weiteren Betätigen des Bedienelements bei Erreichen des Zwischenanschlags (55) ansteigt, wobei der Zwischenanschlag (55) durch ein erstes, mit dem Bedienelement verbundenes Anschlagelement und ein zweites, mit dem Gehäuse verbundenes Anschlagelement gebildet ist, wobei eines der Anschlagelemente ein gefedertes Element ist und das andere Anschlagelement eine Anschlagfläche (45),
**dadurch gekennzeichnet, dass** die Bedienkraft (F) nach Überwinden des Zwischenanschlags (55) bei weiterer Betätigung des Bedienelements in Betätigungsrichtung (57, 70) wieder abfällt, und dass das gefederte Element beim Betätigen des Bedienelements an einer Gleitfläche (44) abgleitet, die einen ersten, in Betätigungsrichtung (57, 70) vor der Anschlagfläche (45) liegenden Abschnitt (44.1) und einen zweiten, in Betätigungsrichtung (57, 70) hinter der Anschlagfläche (45) liegenden Abschnitt (44.2) besitzt.

2. Arbeitsgerät nach Anspruch 1,
**dadurch gekennzeichnet, dass** die Bedienkraft (F) nach Überwinden des Zwischenanschlags (55) kleiner als die Hälfte der maximalen Bedienkraft (F) beim Überwinden des Zwischenanschlags (55) ist.

3. Arbeitsgerät nach Anspruch 1 oder 2,
**dadurch gekennzeichnet, dass** sich die Anschlagelemente über den gesamten Bedienweg (s) des Bedienelements von der Nullstellung (74) bis zu der Maximalstellung (75) relativ zueinander bewegen.

4. Arbeitsgerät nach einem der Ansprüche 1 bis 3,
**dadurch gekennzeichnet, dass** die Anschlagfläche (45) zur Bewegungsrichtung (73) des gefederten Elements bei Erreichen der Anschlagfläche (45) um einen Winkel (β) von mehr als 45° geneigt ist.

5. Arbeitsgerät nach einem der Ansprüche 1 bis 4,
**dadurch gekennzeichnet, dass** die Anschlagfläche (45) eine Rampe zwischen den beiden Abschnitten (44.1, 44.2) der Gleitfläche (44) bildet.

6. Arbeitsgerät nach einem der Ansprüche 1 bis 5,
**dadurch gekennzeichnet, dass** die Gleitfläche (44) im ersten Abschnitt (44.1) und im zweiten Abschnitt (44.2) etwa parallel zur Bewegungsrichtung (73) der Gleitfläche (44) verläuft, oder dass die Gleitfläche (44) im zweiten Abschnitt (44.2) gegenüber der Bewegungsrichtung (73), in der sich die Gleitfläche (44) bei Betätigung des Bedienelements gegenüber dem gefederten Element bewegt, geneigt verläuft, wobei die Gleitfläche (44) insbesondere um eine Schwenkachse (19) schwenkbar gelagert ist und der Abstand (b, c) der Anlagestelle (86), an der das gefederte Element an der Gleitfläche (44) anliegt, zur Schwenkachse (19) sich im zweiten Abschnitt (44.2) bei einer Bewegung des Bedienelements in der Betätigungsrichtung (57, 70) kontinuierlich vergrößert.

7. Arbeitsgerät nach einem der Ansprüche 1 bis 6,
**dadurch gekennzeichnet, dass** das Einstellelement (17) über ein Stellgetriebe auf mindestens eines der beiden Anschlagelemente wirkt.

8. Arbeitsgerät nach Anspruch 7,
**dadurch gekennzeichnet, dass** das Stellgetriebe einen Positionierzapfen (58) besitzt, der in einer Positioniernut (40) geführt ist.

9. Arbeitsgerät nach Anspruch 8,
**dadurch gekennzeichnet, dass** die Positioniernut (40) spiralförmig verläuft.

10. Arbeitsgerät nach Anspruch 8 oder 9,
**dadurch gekennzeichnet, dass** die Positioniernut (40) am Einstellelement (17) ausgebildet ist und der Positionierzapfen (58) fest mit einem der Anschlagelemente verbunden ist.

11. Arbeitsgerät nach einem der Ansprüche 7 bis 10,
**dadurch gekennzeichnet, dass** das Einstellelement (17) auf das zweite Anschlagelement wirkt, wobei das zweite Anschlagelement zur Verstellung des Zwischenanschlags (55) in Betätigungsrichtung (57, 70) des Bedienelements beweglich ist.

12. Arbeitsgerät nach Anspruch 11,
**dadurch gekennzeichnet, dass** das Bedienelement um eine Schwenkachse (19) schwenkbar gelagert ist, und dass das zweite Anschlagelement zur Verstellung des Zwischenanschlags (55) um die Schwenkachse (19) des Bedienelements verschwenkbar ist.

13. Arbeitsgerät nach einem der Ansprüche 1 bis 12,
**dadurch gekennzeichnet, dass** das Bedienelement ein Gashebel (14) ist, der einen vom Bediener zu betätigenden Betätigungsabschnitt (37) und einen Befestigungsabschnitt (38), an dem ein Übertragungselement zur Übertragung der Stellbewegung des Gashebels (14) auf den Antriebsmotor festgelegt ist, umfasst, wobei die relative Lage von Betätigungsabschnitt (37) und Befestigungsabschnitt (38) einstellbar ist, und wobei an dem Betätigungsabschnitt (37) ein Anschlagelement festgelegt ist.

14. Arbeitsgerät nach einem der Ansprüche 1 bis 13,
**dadurch gekennzeichnet, dass** die Position des Einstellelements (17) unabhängig von der Position des Bedienelements einstellbar ist.

15. Arbeitsgerät nach einem der Ansprüche 1 bis 14,
**dadurch gekennzeichnet, dass** das Bedienelement in Richtung auf seine Nullstellung (74) federbeaufschlagt ist, und dass die Bedienkraft (F), die zur Verstellung des Bedienelements um einen Verstellweg (s) benötigt wird, vor dem Erreichen des Zwischenanschlags (55) und nach dem Überwinden des Zwischenanschlags (55) etwa gleich groß ist, oder dass die Bedienkraft (F), die zur Verstellung des Bedienelements um einen Verstellweg (s) benötigt wird, vor dem Erreichen des Zwischenanschlags (55) kleiner als nach dem Überwinden des Zwischenanschlags (55) ist.

## Claims

1. Working implement with a drive motor for driving at least one tool and with an operating device for the drive motor, wherein the operating device comprises a control for operation by the operator, wherein the control is movably mounted in a housing and can be adjusted in an actuation direction (57, 70) from a zero position (74) to a maximum position (75) and wherein an intermediate stop (55), the position of which can be adjusted via an adjusting element (17), acts between the zero position (74) and the maximum position (75), wherein the control, on reaching the intermediate stop (55), can be actuated further to the maximum position (75), and wherein the operating force (F) increases for further actuation of the control on reaching the intermediate stop (55), wherein the intermediate stop (55) is formed by a first stop element connected to the control and by a second stop element connected to the housing, wherein one of the stop elements is a spring-loaded element and the other stop element is a stop face (45), **characterised in that** the operating force (F), on overcoming the intermediate stop (55), decreases again if the control is actuated further in the actuation direction (57, 70), and **in that** the spring-loaded element, if the control is actuated, slides on a sliding surface (44) having a first section (44.1) lying in front of the stop face (45) in the actuation direction (57, 70) and a second section (44.2) lying behind the stop face (45) in the actuation direction (57, 70).

2. Working implement according to claim 1,
**characterised in that** the operating force (F), on overcoming the intermediate stop (55), is less than half the maximum operating force (F) during the overcoming the intermediate stop (55).

3. Working implement according to claim 1 or 2,
**characterised in that** the stop elements move relative to each other along the entire operating stroke (s) of the control from the zero position (74) to the maximum position (75).

4. Working implement according to any of claims 1 to 3,
**characterised in that** the stop face (45) is inclined by an angle (β) of more than 45° relative to the direction of movement (73) of the spring-loaded element on reaching the stop face (45).

5. Working implement according to any of claims 1 to 4,
**characterised in that** the stop face (45) forms a ramp between the two sections (44.1, 44.2) of the sliding surface (44).

6. Working implement according to any of claims 1 to 5,
**characterised in that** the sliding surface (44) extends approximately parallel to the direction of movement (73) of the sliding surface (44) in the first section (44.1) and in the second section (44.2), or **in that** the sliding surface (44) extends in the second section (44.2) at an angle relative to the direction of movement (73), in which the sliding surface (44) moves relative to the spring-loaded element if the control is operated, wherein the sliding surface (44) is in particular pivotably mounted about a pivot axis (19) and the distance (b, c) of the contact point (86), where the spring-loaded element contacts the sliding surface (44), from the pivot axis (19) increases continuously in the second section (44.2) if the control is moved in the actuation direction (57, 70).

7. Working implement according to any of claims 1 to 6,
**characterised in that** the adjusting element (17) acts on at least one of the two stop elements via an actuating mechanism.

8. Working implement according to claim 7,
**characterised in that** the actuating mechanism has a positioning pin (58) guided in a positioning groove (40).

9. Working implement according to claim 8,
**characterised in that** the positioning groove (40) is helical.

10. Working implement according to claim 8 or 9,
**characterised in that** the positioning groove (40) is formed on the adjusting element (17) and the positioning pin (58) is permanently joined to one of the stop elements.

11. Working implement according to any of claims 7 to 10,
**characterised in that** the adjusting element (17) acts on the second stop element, the second stop element being movable for adjusting the intermediate stop (55) in the actuation direction (57, 70) of the control.

12. Working implement according to claim 11,
**characterised in that** the control is pivotably mounted about a pivot axis (19), and **in that** the second stop element is pivotable about the pivot axis (19) of the control for adjusting the intermediate stop (55).

13. Working implement according to any of claims 1 to 12,
**characterised in that** the control is an accelerator (14) comprising an actuating section (37) to be actuated by the operator and a mounting section (38), where a transmission element for transmitting the actuating movement of the accelerator (14) to the drive motor is located, wherein the relative position of the actuating section (37) and the mounting section (38) is adjustable, and wherein a stop element is located on the actuating section (37).

14. Working implement according to any of claims 1 to 13,
**characterised in that** the position of the adjusting element (17) can be adjusted independently of the position of the control.

15. Working implement according to any of claims 1 to 14,
**characterised in that** the control is spring-loaded towards its zero position (74), and **in that** the operating force (F) required for moving the control along an operating stroke (s) is approximately the same before reaching the intermediate stop (55) and after overcoming the intermediate stop (55), or **in that** the operating force (F) required for moving the control along an operating stroke (s) is less before reaching the intermediate stop (55) than after overcoming the intermediate stop (55).

## Revendications

1. Appareil de travail avec un moteur d'entraînement pour entraîner au moins un outil, et avec un dispositif de manoeuvre pour le moteur d'entraînement, le dispositif de manoeuvre comprenant un élément de manoeuvre à actionner par l'utilisateur, l'élément de manoeuvre étant monté mobile dans un boîtier et pouvant être déplacé dans un sens d'actionnement (57, 70) d'une position zéro (74) jusqu'à une position maximale (75), et une butée intermédiaire (55) dont la position est réglable par l'intermédiaire d'un élément de réglage (17) agissant entre la position zéro (74) et la position maximale (75), l'élément de manoeuvre, après qu'il a atteint la butée intermédiaire (55), pouvant être actionné encore jusqu'à la position maximale (75), et la force de manoeuvre (F) pour la poursuite de l'actionnement de l'élément de manoeuvre augmentant lorsque la butée intermédiaire (55) est atteinte, la butée intermédiaire (55) étant formée par un premier élément de butée, relié à l'élément de manoeuvre, et par un second élément de butée, relié au boîtier, l'un des éléments de butée étant un élément à ressort tandis que l'autre élément de butée est une surface de butée (45), **caractérisé en ce que** la force de manoeuvre (F), après le franchissement de la butée intermédiaire (55), retombe lors de la poursuite de l'actionnement de l'élément de manoeuvre dans le sens d'actionnement (57, 70), et **en ce que** l'élément à ressort, lors de l'actionnement de l'élément de manoeuvre, glisse sur une surface de glissement (44) qui comporte une première section (44.1), située devant la surface de butée (45) dans le sens d'actionnement (57, 70), et une seconde section (44.2), située derrière la surface de butée (45) dans le sens d'actionnement (57, 70).

2. Appareil de travail selon la revendication 1,
**caractérisé en ce que** la force de manoeuvre (F) après franchissement de la butée intermédiaire (55) est inférieure à la moitié de la force de manoeuvre (F) maximale lors du franchissement de ladite butée intermédiaire (55).

3. Appareil de travail selon la revendication 1 ou 2,
**caractérisé en ce que** les éléments de butée se déplacent l'un par rapport à l'autre sur toute la course de manoeuvre (s) de l'élément de manoeuvre de la position zéro (74) à la position maximale (75).

4. Appareil de travail selon l'une des revendications 1 à 3,
**caractérisé en ce que** la surface de butée (45) est inclinée par rapport au sens de déplacement (73) de l'élément à ressort, lorsque la surface de butée (45) est atteinte, suivant un angle (β) de plus de 45°.

5. Appareil de travail selon l'une des revendications 1 à 4,
**caractérisé en ce que** la surface de butée (45) forme une rampe entre les deux sections (44.1, 44.2) de la surface de glissement (44).

6. Appareil de travail selon l'une des revendications 1 à 5,
**caractérisé en ce que** la surface de glissement (44) est à peu près parallèle, dans la première section (44.1) et dans la seconde section (44.2), au sens de déplacement (73) de la surface de glissement (44), ou **en ce que** la surface de glissement (44), dans la seconde section (44.2), est inclinée par rapport au sens de déplacement (73) dans lequel ladite surface de glissement (44) se déplace lors de l'actionnement de l'élément de manoeuvre par rapport à l'élément à ressort, la surface de glissement (44) étant montée pivotante en particulier sur un axe de pivotement (19), et la distance (b, c) entre le point d'application (86) au niveau duquel l'élément à ressort est appliqué contre la surface de glissement (44), et l'axe de pivotement (19) va en augmentant de manière continue dans la seconde section (44.2) lors d'un déplacement de l'élément de manoeuvre dans le sens d'actionnement (57, 70).

7. Appareil de travail selon l'une des revendications 1 à 6,
**caractérisé en ce que** l'élément de réglage (17) agit par l'intermédiaire d'un mécanisme de réglage sur l'un au moins des deux éléments de butée.

8. Appareil de travail selon la revendication 7,
**caractérisé en ce que** le mécanisme de réglage comporte un ergot de positionnement (58) qui est guidé dans une rainure de positionnement (40).

9. Appareil de travail selon la revendication 8,
**caractérisé en ce que** la rainure de positionnement (40) a une forme en spirale.

10. Appareil de travail selon la revendication 8 ou 9,
**caractérisé en ce que** la rainure de positionnement (40) est formée sur l'élément de réglage (17), et l'ergot de positionnement (58) est relié de manière fixe à l'un des éléments de butée.

11. Appareil de travail selon l'une des revendications 7 à 10,
**caractérisé en ce que** l'élément de réglage (17) agit sur le second élément de butée, le second élément de butée étant mobile pour déplacer la butée intermédiaire (55) dans le sens d'actionnement (57, 70) de l'élément de manoeuvre.

12. Appareil de travail selon la revendication 11,
**caractérisé en ce que** l'élément de manoeuvre est monté pivotant sur un axe de pivotement (19), et **en ce que** le second élément de butée est apte à pivoter, pour déplacer la butée intermédiaire (55), sur l'axe de pivotement (19) de l'élément de manoeuvre.

13. Appareil de travail selon l'une des revendications 1 à 12,
**caractérisé en ce que** l'élément de manoeuvre est une manette des gaz (14) qui comprend une section d'actionnement (37) à actionner par l'utilisateur, et une section de fixation (38) à laquelle est fixé un élément de transmission pour transmettre le déplacement de réglage de la manette des gaz (14) au moteur d'entraînement, la position relative de la section d'actionnement (37) et de la section de fixation (38) étant réglable, et un élément de butée étant fixé à la section d'actionnement (37).

14. Appareil de travail selon l'une des revendications 1 à 13,
**caractérisé en ce que** la position de l'élément de réglage (17) est réglable indépendamment de la position de l'élément de manoeuvre.

15. Appareil de travail selon l'une des revendications 1 à 14,
**caractérisé en ce que** l'élément de manoeuvre est contraint par ressort en direction de sa position zéro, et **en ce que** la force de manoeuvre (F) qui est nécessaire pour déplacer d'une course de déplacement (s) l'élément de manoeuvre est aussi grande avant d'atteindre la butée intermédiaire (55) et après le franchissement de ladite butée intermédiaire (55), ou **en ce que** la force de manoeuvre (F) qui est nécessaire pour déplacer d'une course de déplacement (s) l'élément de manoeuvre est plus petite avant d'atteindre la butée intermédiaire (55) qu'après le franchissement de ladite butée intermédiaire (55).
